# EUROPÄISCHE PATENTSCHRIFT

(11) **EP 1 537 173 B1**
(45) Veröffentlichungstag und Bekanntmachung des Hinweises auf die Patenterteilung: **01.04.2009**
(21) Anmeldenummer: 03793757.0
(22) Anmeldetag: 26.08.2003
(51) Int. Cl.: C08K 13/02, C08K 5/5313, C08K 5/3492, C08K 3/22

(54) **FLAMMSCHUTZMITTEL-STABILISATOR-KOMBINATION FUR THERMOPLASTISCHE POLYMERE**
FLAMEPROOF AGENT-STABILISER-COMBINATION FOR THERMOPLASTIC POLYMERS
COMBINAISON AGENT IGNIFUGEANT-STABILISANT POUR POLYMERES THERMOPLASTIQUES

(30) Priorität: 03.09.2002 DE 10241126
(43) Veröffentlichungstag der Anmeldung: 08.06.2005
(73) Patentinhaber: Clariant Produkte (Deutschland) GmbH, 65929 Frankfurt am Main (DE)
(72) Erfinder: HOEROLD, Sebastian, 86420 Diedorf (DE); WANZKE, Wolfgang, 86161 Augsburg (DE); SCHACKER, Ottmar, 86368 Gersthofen (DE); NASS, Bernd, 86152 Augsburg (DE); SICKEN, Martin, 51149 Koeln (DE)
(86) Internationale Anmeldenummer: PCT/EP2003/009434
(87) Internationale Veröffentlichungsnummer: WO 2004/022640

(56) Entgegenhaltungen:
- EP-A- 1 024 167
- EP-A- 1 024 168
- US-B1- 6 270 560

## Beschreibung

Die Erfindung betrifft eine Flammschutzmittel-Stabilisator-Kombination für thermoplastische Polymere, sowie polymere Formmassen, die solche Flammschutzmittel-Stabilisator-Kombinationen enthalten.

Die Verarbeitung von thermoplastischen Kunststoffen erfolgt bis auf wenige Ausnahmen in der Schmelze. Die damit verbundenen Struktur- und Zustandsänderungen übersteht kaum ein Kunststoff, ohne sich in seiner chemischen Struktur zu verändern. Vernetzungen, Oxidation, Molekulargewichtsänderungen und damit auch Änderungen der physikalischen und technischen Eigenschaften können die Folge sein. Um die Belastung der Polymere während der Verarbeitung zu reduzieren, setzt man je nach Kunststoff unterschiedliche Additive ein. Im Allgemeinen werden Stabilisatoren zugegeben, die die Veränderungsprozesse wie Vernetzungs- oder Abbaureaktionen unterbinden oder zumindest bremsen. Weiterhin werden den meisten Kunststoffen Gleitmittel beigemengt, die primär die Aufgabe haben, das Fließverhalten der Schmelze zu verbessern.

In der Regel wird eine Vielzahl unterschiedlicher Additive gleichzeitig verwendet, von denen jedes für sich eine Aufgabe übernimmt. So werden Antioxidantien und Stabilisatoren eingesetzt, damit der Kunststoff ohne chemische Schädigung die Verarbeitung übersteht und anschließend lange Zeit gegen äußere Einflüsse wie Hitze, UV-Licht, Witterung und Sauerstoff (Luft) stabil ist. Neben der Verbesserung des Fließverhaltens verhindern Gleitmittel ein zu starkes Kleben der Kunststoffschmelze an heißen Maschinenteilen und wirken als Dispergiermittel für Pigmente, Füll- und Verstärkungsstoffe.

Durch die Verwendung von Flammschutzmitteln kann die Stabilität des Kunststoffs bei der Verarbeitung in der Schmelze beeinflusst werden. Flammschutzmittel müssen häufig in hohen Dosierungen zugesetzt werden, um eine ausreichende Flammwidrigkeit des Kunststoffs nach internationalen Normen sicherzustellen. Aufgrund Ihrer chemischen Reaktivität, die für die Flammschutzwirkung bei hohen Temperaturen erforderlich ist, können Flammschutzmittel die Verarbeitungsstabilität von Kunststoffen beeinträchtigen. Es kann beispielsweise zu verstärktem Polymerabbau, zu Vernetzungsreaktionen, zu Ausgasungen oder Verfärbungen kommen. Effekte, die bei der Kunststoffverarbeitung ohne Flammschutzmittel eventuell gar nicht oder nur in abgeschwächter Form auftreten.

Ohne den Zusatz von Flammschutzmitteln werden Polyamide im Allgemeinen durch kleine Mengen von Kupferhalogeniden sowie aromatische Amine und sterisch gehinderten Phenole stabilisiert, wobei die Erzielung einer langfristigen Stabilität bei hohen Dauergebrauchstemperaturen im Vordergrund steht (H. Zweifel (Ed.): "Plastics Additives Handbook", 5th Edition, Carl Hanser Verlag, München, 2000, Seiten 80 bis 84). Auch Polyester benötigen eine antioxidative Stabilisierung im wesentlichen für den Dauergebrauch, nicht für den Verarbeitungsprozess.

Insbesondere für thermoplastische. Polymere haben sich die Salze von Phosphinsäuren (Phosphinate) als wirksame flammhemmende Zusätze erwiesen (DE-A-2 252 258 und DE-A-2 447 727). Calcium- und Aluminiumphosphinate sind in Polyestern als besonders effektiv wirksam beschrieben worden und beeinträchtigen die Materialeigenschaften der Polymerformmassen weniger als z.B. die Alkalimetallsalze (EP-A-0 699 708).

Darüber hinaus wurden synergistische Kombinationen von Phosphinaten mit bestimmten stickstoffhaltigen Verbindungen gefunden, die in einer ganzen Reihe von Polymeren als Flammschutzmittel effektiver wirken, als die Phosphinate allein (PCT/EP97/01664 sowie DE-A-197 34 437 und DE-A-197 37 727).

Zur Stabilisierung von Polymerformmassen mit phosphorhaltigen Flammschutzmitteln haben sich Carbodiimide, Isocyanate und Isocyanurate als wirksam erwiesen (DE-A-199 20 276).

Insbesondere bei der Verwendung phosphorhaltiger Flammschutzmittel in Polyamiden und Polyestern erwies sich die Wirkung der bisher beschriebenen Stabilisatoren als unzureichend, speziell um die bei der Verarbeitung auftretenden Effekte wie Verfärbung und Molekulargewichtsabbau zu unterdrücken.

Die DE-A-196 14 424 beschreibt Phosphinate in Verbindung mit Stickstoffsynergisten in Polyestern und Polyamiden. Die DE-A-199 33 901 beschreibt Phosphinate in Kombination mit Melaminpolyphosphat als Flammschutzmittel für Polyester und Polyamide. Bei der Verwendung dieser neu entwickelten, sehr wirksamen Flammschutzmittel kann es aber zu partiellem Polymerabbau sowie zu Verfärbungen des Polymers, insbesondere bei Verarbeitungstemperaturen oberhalb von 300°C, kommen. Bei Extrusion und Spritzguss wird teilweise störende Qualmentwicklung beobachtet.

Es war daher Aufgabe der vorliegenden Erfindung, Flammschutzmittelkombinationen für thermoplastische Kunststoffe zur Verfügung zu stellen, die neben der Flammwidrigkeit auch eine stabilisierende Wirkung auf den Kunststoff ausüben. Gelöst wird diese Aufgabe durch Zusatz von basischen oder amphoteren Oxiden. Hydroxiden, Carbonaten, Silikaten, Boraten, Stannaten, gemischten Oxid-Hydroxiden, Oxid-Hydroxid-Carbonaten, Hydroxid-Silikaten oder Hydroxid-Boraten oder Mischungen dieser Stoffe bei der Verwendung von Phosphinaten oder deren Mischungen mit stickstoffhaltigen Synergisten als Flammschutzmittel.

Gegenstand der Erfindung ist daher eine Flammschutzmittel-Stabillsator-Kombination für thermoplastische Polymere, enthaltend als Komponente A 25,0 bis 79,9 Gew.-% eines Phosphinsäureselzes der Formel (I) und/oder eines Diphosphinsäuresalzes der Formel (II) und/oder deren Polymere, 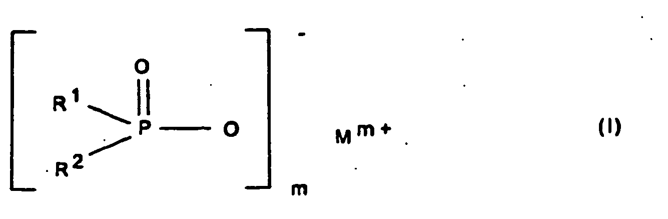 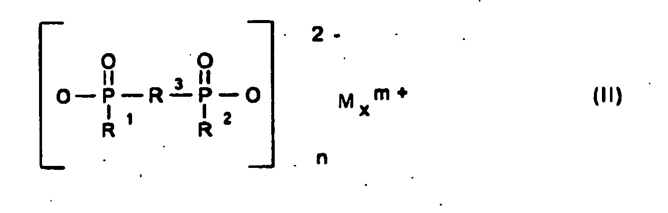 worin
- R¹, R²: gleich oder verschieden sind und C₁-C₆-Alkyl, linear oder verzweigt und/oder Aryl;
- R³: C₁-C₁₀-Alkylen, linear oder verzweigt, C₆-C₁₀-Arylen, -Alkylarylen oder -Arylalkylen;
- M: Mg. Ca. Al, Sb, Sn, Ge, Ti, Zn, Fe, Zr, Ce, Bi, Sr, Mn, Li, Na, K und/oder eine protonierte Stickstoffbase;
- m: 1 bis 4;
- n: 1 bis 4;
- x: 1 bis 4
bedeuten,
als Komponente B
20 bis 50 Gew.-% Melaminpolyphosphat und
als Komponente C 0,1 bis 50 Gew.-%, Magnesiumoxid, Zinkoxid, Manganoxid,
Zinnoxid, Dihydrotalcit, Hydrocalumit, Magnesiumhydroxid, Calciumhydroxid,
Zinkhydroxid, Zinnoxidhydrat, Manganhydroxid, Zinkborat, basisches Zink-Silikat,
Zinkstannat oder Mischungen dieser Stoffe wobei die Summe der Komponenten
immer .100 Gew.-% beträgt.

Überraschenderweise wurde gefunden, dass erfindungsgemäße Kombinationen von Phosphinaten und gegebenenfalls Stickstoffsynergisten, wie beispielsweise Melaminpolyphosphat, eine deutlich verbesserte Stabilität bei der Einarbeitung in Polymere aufweisen, wenn bestimmte Oxide, Hydroxide, Carbonate, Silikate, Borate, Stannate, gemischte Oxid-Hydroxide, Oxid-Hydroxid-Carbonate, Hydroxid-Silikate oder Hydroxid-Borate oder Mischungen dieser Stoffe zugesetzt werden. Es können beispielsweise Magnesiumoxid, Calciumoxid, Aluminiumoxid, Zinkoxid, Manganoxid, Zinnoxid, Aluminiumhydroxid, Böhmit, Dihydrotalcit, Hydrocalumit, Magnesiumhydroxid, Calciumhydroxid, Zinkhydroxid, Zinnoxidhydrat, Manganhydroxid, Zinkborat, basisches Zinksilikat oder Zinkstannat verwendet werden.

Die erfindungsgemäßen Kombinationen reduzieren die Verfärbung der Kunststoffe bei der Verarbeitung in der Schmelze und unterdrücken den Abbau der Kunststoffe zu Einheiten mit geringerem Molekulargewicht. Gleichzeitig bleibt die Flammwidrigkeit in vollem Umfang erhalten.

Überraschenderweise wurde auch gefunden, dass durch die erfindungsgemäßen Zusätze die Qualmentwicklung bei Extrusion und Spritzguss vollständig verschwindet.

Bevorzugt bedeutet M Calcium, Aluminium oder Zink.

Unter protonierten Stickstoffbasen werden bevorzugt die protonierten Basen von Ammoniak, Melamin, Triethanolamin, insbesondere NH₄⁺, verstanden.

Bevorzugt sind R¹, R² gleich oder verschieden und bedeuten C₁-C₆-Alkyl, linear oder verzweigt und/oder Phenyl.

Besonders bevorzugt sind R¹, R² gleich oder verschieden und bedeuten Methyl, Ethyl, n-Propyl, iso-Propyl, n-Butyl, tert.-Butyl, n-Pentyl und/oder Phenyl.

Bevorzugt bedeutet R³ Methylen, Ethylen, n-Propylen, iso-Propylen, n-Butylen, tert.-Butylen, n-Pentylen, n-Octylen oder n-Dodecylen.

Geeignete Phosphinate sind in der PCT/WO97/39053 beschrieben, auf die ausdrücklich Bezug genommen wird.

Besonders bevorzugte Phosphinate sind Aluminium-, Calcium- und Zinkphosphinate.

Grundsätzlich ist es möglich, die Phosphinate mit stickstoffhaltigen Verbindungen, die in einer ganzen Reihe von Polymeren als Flammschutzmittel effektiver wirken, als die Phosphinate allein (DE-A-196 14 424, DE-A-197 34 437 und DE-A-197 37 727), einzusetzen. Die Flammschutzwirkung der Phosphinate kann durch Kombination mit weiteren Flammschutzmitteln, vorzugweise stickstoffhaltigen Synergisten oder Phosphor/Stickstoff Flammschutzmitteln verbessert werden.

Geeignete stickstoffhaltige Synergisten sind solche der Formeln (III) bis (VIII) oder Gemische davon 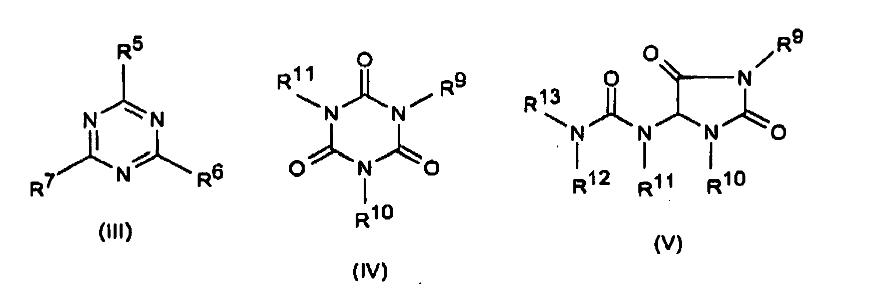 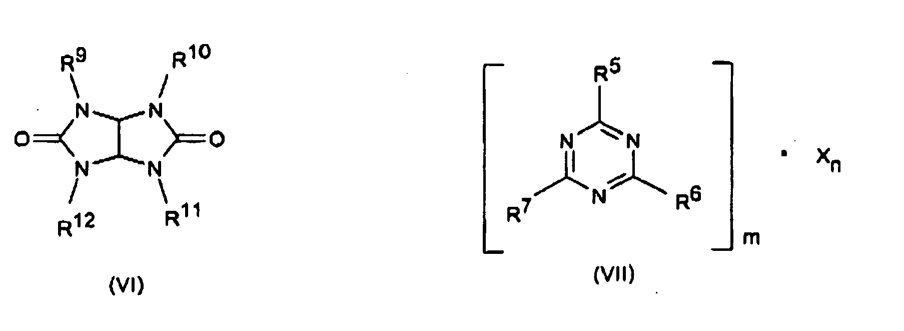 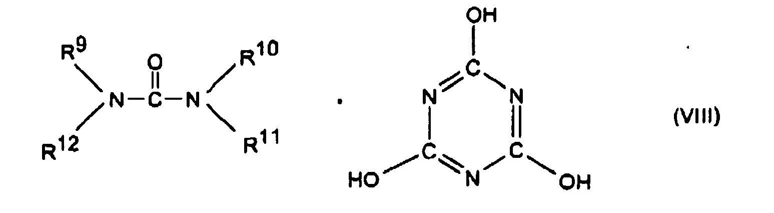 worin
- R⁵ bis R⁷: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₆-Alkenyl, C₁-C₈-Alkoxy, -Acyl, -Acyloxy, C₆-C₁₂-Aryl oder -Arylalkyl, -OR⁸ und -N(R⁶)R⁹, sowie N-alicyclisch oder N-aromatisch,
- R⁸: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₆-Alkenyl, C₁-C₈-Alkoxy, -Acyl, -Acyloxy oder C₆-C₁₂-Aryl oder -Arylalkyl,
- R⁹ bis R¹³: die gleichen Gruppen wie R⁸ sowie -O-R⁸,
- m und n: unabhängig voneinander 1, 2, 3 oder 4,
- X: Säuren, die Addukte mit Triazinverbindungen (III) bilden können,
bedeuten;
oder um oligomere Ester des Tris(hydroxyethyl)isocyanurats mit aromatischen Polycarbonsäuren

Geeignet sind u.a. auch Benzoguanamin, Tris(hydroxyethyl)lsocyanurat, Allantoin, Glycouril, Melamin, Melamincyanurat, Dicyandiamid, Guanidin, Carbodiimide.

Geeignet sind u.a. auch Kondensationsprodukte des Melamins.
Kondensationsprodukte des Melamins sind z. B. Melem, Melam oder Melon bzw. höher kondensierte Verbindungen dieses Typs sowie Gemische derselben und können z. B. durch ein Verfahren hergestellt werden, wie es in WO-A-96/16948 beschrieben ist.

Geeignet sind u.a. auch Umsetzungsprodukte des Melamins mit Phosphorsäure oder kondensierten Phosphorsäuren bzw. Umsetzungsprodukte von Kondensationsprodukten des Melamins mit Phosphorsäure oder kondensierten Phosphorsäuren sowie Gemische der genannten Produkte.

Unter den Umsetzungsprodukten mit Phosphorsäure oder kondensierten Phosphorsäuren versteht man Verbindungen, die durch Umsetzung von Melamin oder den kondensierten Melaminverbindungen, wie Melam, Melem oder Melon etc., mit Phosphorsäure entstehen. Beispiele hierfür sind Dimelaminphosphat,
Dimelaminpyrophosphat, Melaminphosphat, Melaminpyrophosphat, Melaminpolyphosphat, Melampolyphosphat, Melonpolyphosphat und Melempolyphosphat bzw. gemischte Polysalze, wie sie z. B. in der WO 98/39306 beschrieben sind.

Besonders bevorzugt handelt es sich bei dem Phosphor/Stickstoff Flammschutzmittel um Melaminpolyphosphat.

Geeignet sind u.a. auch Phosphor/Stickstoff Flammschutzmittel, wie stickstoffhaltige Phosphate der Formeln (NH₄)_{y} H_{3-y} PO₄ bzw. (NH₄ PO₃)_{z}, mit y gleich 1 bis 3 und z gleich 1 bis 10.000.

Hierbei handelt es sich - bei den Phosphor/Stickstoff Flammschutzmitteln - um Ammoniumhydrogenphosphat, Ammoniumdihydrogenphosphat oder Ammoniumpolyphosphat.

Bevorzugt handelt es sich bei den Metalloxiden um Magnesiumoxid, Calciumoxid, Aluminiumoxid, Zinkoxid, Manganoxid und/oder Zinnoxid.

Bevorzugt handelt es sich bei den Hydroxiden um Aluminiumhydroxid, Böhmit, Magnesiumhydroxid, Hydrotalcit, Hydrocalumit, Calciumhydroxid, Zinkhydroxid. Zinnoxidhydrat und/oder Manganhydroxid.

Bevorzugt handelt es sich bei der Komponente C um Zinkborat, basisches Zinksilikat oder 7-Zinkstannat.

Besonders bevorzugt handelt es sich bei Komponente C um Magnesiumhydroxid, Zinkoxid, Dihydrotalcit oder Böhmit.

Die Mengenverhältnisse der Komponenten A, B und C in der Flammschutzmittel-Stabilisator-Kombination hängen wesentlich vom vorgesehenen Anwendungsgebiet ab und können in weiten Grenzen variieren. Je nach Anwendungsgebiet enthält die Flammschutzmittel-Stabilisator-Kombination 25 bis 79,9 Gew.-% der Komponente A, 20 bis 50 Ges.-% der Komponente B und 0,1 bis 50 Gew.-% der Komponente C.

Besonders bevorzugt enthält die Flammschutzmittel-Stabilisator-Kombination 50 bis 78 Ges.-% der Komponente A, 20 bis 50 Gew.-% der Komponente B und 2 bis 20 Gew.-% der Komponente C.

In einer besonderen Ausführungsform enthält die Flammschutzmittelkombination 60 bis 98 Gew.-% der Komponente A und 2 bis 40 Gew.-% der Komponente C.

Die erfindungsgemäße Flammschitzmittel-Stabilisator-Kombination kann auch Carbodiimide enthalten.

Die Erfindung betrifft auch eine flammfest ausgerüstete Kunststoff-Formmasse, enthaltend die erfindungsgemäße Flammschutzmiftel-Stabilisator-Kombination.

Bevorzugt handelt es sich bei dem Kunststoff um thermoplastische Polymere der Art Polystyrol-HI (High-Impact), Polyphenylenether, Polyamide, Polyester,

Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI) Kunststoffe.

Besonders bevorzugt handelt es sich bei dem Kunststoff um Polyamide, Polyester und PPE/HIPS-Blends.
Bevorzugt wird die Flammschutzmittel-Stabilisator-Kombination in der Kunststoff-Formmasse in einer Gesamtmenge von 2 bis 50 Gew.-%, bezogen auf die Kunststoff-Formmasse, eingesetzt.

Besonders bevorzugt wird die Flammschutzmittel-Stabilisator-Kombination in der Kunststoff-Formmasse in einer Gesamtmenge von 10 bis 30 Gew.-%, bezogen auf die Kunststoff-Formmasse, eingesetzt.

Die Erfindung betrifft schließlich auch Polymer-Formkörper, -Filme, -Fäden und -Fasern enthaltend die erfindungsgemäße Flammschutzmittel-Stabilisator-Kombination.

Die Polymer-Formkörper, -Filme, -Fäden und -Fasern sind **dadurch gekennzeichnet, dass** es sich um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol), Polyamid, Polyester und/oder ABS handelt.

Bevorzugt enthalten die Polymer-Formkörper, -Filme, -Fäden und -Fasern die Flammschutzmittel-Stabilisator-Kombination in einer Gesamt-Menge von 2 bis 50 Gew.-%, bezogen auf den Polymergehalt.

Besonders bevorzugt enthalten die Polymer-Formkörper, -Filme, -Fäden und -Fasern die Flammschutzmittel-Stabilisator-Kombination in einer Gesamt-Menge von 10 bis 30 Gew.-%, bezogen auf den Polymergehalt.

In einer besondern Ausführungsform enthalten die Polymer-Formkörper, -Filme, -Fäden und -Fasern 2 bis 30 Gew.-% der Flammschutzmittel-Stabilisator-Kombination, bestehend aus 50 bis 80 Gew.-% der Komponente A, aus 20 bis 50 Gew.-% der Komponente B und aus 2 bis 20 Gew.-% der Komponente C, bezogen auf den Polymergehalt.

In einer besondern Ausführungsform enthalten die Polymer-Formkörper, -Filme, -Fäden und -Fasern 2 bis 30 Gew.-% der Flammschutzmittel-Stabilisator-Kombination, bestehend aus 60 bis 98 Gew.-% der Komponente A und 2 bis 40 Gew.-% der Komponente C, bezogen auf den Polymergehalt.

Die vorgenannten Additive können in den verschiedensten Verfahrensschritten in den Kunststoff eingebracht werden. So ist es bei Polyamiden oder Polyestern möglich, bereits zu Beginn oder am Ende der Polymerisation/Polykondensation oder in einem folgenden Compoundierprozess die Additive in die Polymerschmelze einzumischen. Weiterhin gibt es Verarbeitungsprozesse bei denen die Additive erst später zugefügt werden. Dies wird insbesondere beim Einsatz von Pigment- oder Additivmasterbatches praktiziert. Außerdem besteht die Möglichkeit, insbesondere pulverförmige Additive auf das durch den Trocknungsprozess eventuell warme Polymergranulat aufzutrommeln.

Bevorzugt liegt die Flammschutzmittel-Stabilisator-Kombination als Granulat, Schuppen, Feinkorn, Pulver und/oder Micronisat vor.

Bevorzugt liegt die Flammschutzmittel-Stabilisator-Kombination als physikalische Mischung der Feststoffe, als Schmelzmischung, als Kompaktat, als Extrudat oder in Form eines Masterbatches vor.

Bevorzugt wird die Mischung in einer Formmasse eines Polyamides oder eines Polyesters verwendet. Geeignete Polyamide sind z.B. in der DE-A-199 20 276 beschrieben.

Bevorzugt handelt es sich bei den Polyamiden um solche vom Aminosäure-Typ und/oder vom Diamin-Dicarbonsäure-Typ.

Bevorzugt handelt es sich bei den Polyamiden um Polyamid 6 und/oder Polyamid 66.

Bevorzugt sind die Polyamide unverändert, gefärbt, gefüllt, ungefüllt, verstärkt, unverstärkt oder auch anders modifiziert.

Bevorzugt handelt es sich bei den Polyestern um Polyethylenterephthalat oder Polybutylenterephthalat.

Bevorzugt sind die Polyester unverändert, gefärbt, gefüllt, ungefüllt, verstärkt, unverstärkt oder auch anders modifiziert.

Zusätzlich können Carbodiimide enthalten sein.

Gegebenenfalls können dem Polymeren weitere Additive zugesetzt werden. Als Additive können Wachse, Lichtschutzmittel, Stabilisatoren, Antioxidantien, Antistatika oder Mischungen derartiger Additive zugesetzt werden.

Als bevorzugte Stabilisatoren können Phosphonite und Phosphite oder Carbodiimide verwendet werden.

Vorgenannte Zusatzstoffe können auch der Flammschutzmittel-Stabilisator-Kombination zugesetzt werden.

### Beispiele

### 1. Eingesetzte Komponenten

### Handelsübliche Polymere (Granulate):

| | |
|---|---|
| Polyamid 6.6 (PA 6.6-GV): | ^{®}Durethan AKV 30 (Fa. Bayer AG, D) enthält 30 % Glasfasern. |
| Polybutylenterephthalat (PBT-GV): | ^{®}Celanex 2300 GV1/30 (Fa. Ticona, D) enthält 30 % Glasfasern. |

Flammschutzmittelkomponenten (pulverförmig):
Aluminiumsalz der Diethylphosphinsäure, im folgenden als DEPAL bezeichnet.
Melapur 200 (Melaminpolyphosphat), im folgenden als MPP bezeichnet, Fa. DSM Melapur, NL
Zinkoxid aktiv, Bayer AG, D
Magnesiumhydroxid Magnfin H 10, Martinswerk, D
Böhmit, Fa. Nabaltec, D
Dihydrotalcit DHT 4A, Kyowa Chemicals, Japan

### 2. Herstellung, Verarbeitung und Prüfung von flammhemmenden Kunststoff-Formmassen

Die Flammschutzmittelkomponenten wurden in dem in den Tabellen angegebenen Verhältnis mit dem Polymergranulat, den Gleitmitteln und Stabilisatoren vermischt und auf einem Doppelschnecken-Extruder (Typ Leistritz LSM 30/34) bei Temperaturen von 260 bis 310°C (PA 6.6-GV) bzw. von 240 bis 280°C (PBT-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Arburg 320 C Allrounder) bei Massetemperaturen von 270 bis 320°C (PA 6.6-GV) bzw. von 260 bis 280°C (PBT-GV) zu Prüfkörpern verarbeitet und anhand des UL 94-Tests (Underwriter Laboratories) auf Flammwidrigkeit geprüft und klassifiziert.

Die Fließfähigkeit der Formmassen wurde durch Ermittlung des Schmelzvolumenindex (MVR) bei 275°C/2,16 kg bestimmt. Ein starker Anstieg des MVR-Wertes deutet auf einen Polymerabbau hin.

Die Verarbeitungseigenschaften in Polyester wurden anhand der spezifischen Viskosität (SV) beurteilt. Aus dem Granulat der Kunststoff-Formmasse wurde nach ausreichender Trocknung eine 1,0 %ige Lösung in Dichloressigsäure hergestellt und der SV-Wert bestimmt. Je höher der SV-Wert ist, desto geringer war der Polymerabbau während der Einarbeitung des Flammschutzmittels.

Sämtliche Versuche der jeweiligen Serie wurden, falls keine anderen Angaben gemacht wurden, aufgrund der Vergleichbarkeit unter identischen Bedingungen (Temperaturprogramme, Schneckengeometrien, Spritzgießparameter, etc.), durchgeführt.

Die Tabellen 1 und 3 zeigen Vergleichsbeispiele, in denen eine Flammschutzmittel-Kombination, basierend auf dem Aluminiumsalz der Diethylphosphinsäure (DEPAL) und dem stickstoffhaltigen Synergisten Melaminpolyphosphat (MPP) und dem Metalloxid bzw. -hydroxid allein verwendet wurden.

Die Ergebnisse der Beispiele, in denen die Flammschutzmittel-Mischung gemäß der Erfindung eingesetzt wurden, sind in den Tabellen 2 und 4 aufgelistet. Alle Mengen sind als Gew.-% angegeben und beziehen sich auf die Kunststoff-Formmasse einschließlich der Flammschutzmittel-Kombination und Zusatzstoffen.

Aus den Beispielen geht hervor, dass die erfindungsgemäßen Zusätze (Mischung aus den Komponenten Phosphinat, Stickstoffsynergist und Oxid bzw. Hydroxid bzw. gemischtes Oxid-Hydroxid oder Oxid-Hydroxid-Carbonat) die Verarbeitbarkeit der Polymere eindeutig verbessert, ohne die Flammschutzwirkung zu beeinträchtigen.

Die Einarbeitung der Flammschutzmittel in PA 6.6 führt zu einem Polymerabbau, erkennbar an hohen MVR-Werten, und zu einer Graubraun-Verfärbung der Formmassen (V2, V3, V4). Durch die alleinige Zugabe von Oxid oder Hydroxid oder gemischten Oxid-Hydroxid oder Oxid-Hydroxid-Carbonat kann keine Flammwidrigkeit erreicht werden (V5, V6, V7, V8, V9).

Wird nun eine erfindungsgemäße Flammschutzmittel-Stabilisator-Kombination aus Phosphinat, Stickstoffsynergist und von Oxid oder Hydroxid oder gemischten Oxid-Hydroxid oder Oxid-Hydroxid-Carbonat eingesetzt (B1, B2, B3, B4, B5, B6), kann eine deutliche Stabilisierung der flammgeschützten Polyamidschmelze und eine wesentlich verminderte Verfärbung der Prüfkörper festgestellt werden.

Die Einarbeitung der Flammschutzmittel in Polyester (PBT) führt sowohl durch Depal als auch durch Melaminpolyphosphat zu Polymerabbau, erkennbar an Verringerung der SV Zahl und Gelbverfärbung beobachtet. Die Kombination von Depal und Melaminpolyphosphat führt zu einer V-0 Einstufung bei 15 Gew.-% Flammschutzmittel. Oxide oder Hydroxide oder gemischtes Oxid-Hydroxide oder Oxid-Hydroxid-Carbonate zeigen allein so gut wie keine Wirkung als Flammschutzmittel (Tabelle 3).

In flammgeschütztem Polyester (PBT) wurde bei Anwendung der erfindungsgemäßen Kombination von Phosphinat, Stickstoffsynergist und Metalloxid bzw. -hydroxid ein deutlich verminderter Polymerabbau, erkennbar an hohen SV-Zahlen, und eine deutlich geringere Verfärbung festgestellt (Tabelle 4).

Soweit nicht anders angegeben, handelt es sich bei Mengenangaben immer um Gew.-%.

**Tabelle 1:**

| Vergleichsbeispiele (Versuchsreihe 1): Flammschutz-Formmassen mit den Komponenten als einzelne Additive in glasfaserverstärktem PA 6.6. | | | | | | |
|---|---|---|---|---|---|---|
| Vergleich | DEPAL [%] | MPP [%] | Metalloxid | Klasse nach UL 94 (0,8 mm) | MVR [cm³/10'] | Farbe* |
| V1 | 0 | 0 | 0 | n.k.^{**)} | 19 | weiß |
| V2 | 10 | 5 | 0 | V-0 | 44 | grau-braun |
| V3 | 0 | 10 | 0 | n.k. | 55 | grau |
| V4 | 10 | 0 | 0 | V-2 | 20 | braun |
| V5 | 0 | 0 | 5% Dihydrotalcit | n.k. | 21 | weiß |
| V6 | 0 | 0 | 5% Böhmit | n.k. | 21 | weiß |
| V7 | 0 | 0 | 5% Manganoxid | n.k. | 21 | weiß |
| V8 | 0 | 0 | 5% Zinkoxid | n.k. | 21 | weiß |
| V9 | 0 | 0 | 5% Magnesiumhydroxid | n.k. | 25 | weiß |

| | | | | | | |
|---|---|---|---|---|---|---|
| ^{*)} von Prüfkörper, Massetemperatur beim Spritzgießen: 300°C ^{**)} n.k. = nicht klassifizierbar | | | | | | |

**Tabelle 2:**

| Erfindungsgemäße Beispiele: Flammschutz-Formmassen mit der Kombination von DEPAL mit Stickstoffsynergist und Metalloxid bzw. Hydroxid in glasfaserverstärktem PA 6.6. | | | | | | |
|---|---|---|---|---|---|---|
| Beispiel | DEPAL [%] | MPP [%] | Metalloxid | Klasse nach UL 94 (0,8 mm) | MVR [cm³/10'] | Farbe* |
| B1 | 10 | 5 | 2% Zinkoxid | V-0 | 19 | weiß |
| B2 | 10 | 5 | 5% Magnesiumhydroxid | V-0 | 17 | weiß |
| B3 | 10 | 5 | 2% Magnesiumhydroxid | V-0 | 21 | weiß |
| B4 | 10 | 5 | 2% Böhmit | V-0 | 20 | weiß |
| B5 | 10 | 5 | 2% Dihydrotalcit | V-0 | 21 | weiß |
| B6 | 10 | 5 | 2% Manganoxid | V-0 | 24 | weiß |

| | | | | | | |
|---|---|---|---|---|---|---|
| ^{*)} von Prüfkörper, Massetemperatur beim Spritzgießen: 300°C | | | | | | |

**Tabelle 3:**

| Vergleichsbeispiele: Flammschutz-Formmassen mit den Komponenten als einzelne Additive in glasfaserverstärktem PBT | | | | | | |
|---|---|---|---|---|---|---|
| Vergleich | DEPAL [%] | MPP [%] | Metalloxid | Klasse nach UL 94 (0,8 mm) | SV- Zahl | Farbe* |
| V10 | 0 | 0 | 0 | n.k.^{**)} | 1200 | weiß |
| V11 | 10 | 5 | 0 | V-0 | 721 | gelb |
| V12 | 0 | 10 | 0 | n.k. | 1100 | gelb |
| V13 | 20 | 0 | 0 | V-0 | 661 | gelb |
| V14 | 0 | 0 | 5% Zinkoxid | n.k. | 1189 | weiß |
| V15 | 0 | 0 | 5% Böhmit | n.k. | 1176 | weiß |

| | | | | | | |
|---|---|---|---|---|---|---|
| ^{*)} von Prüfkörper, Massetemperatur beim Spritzgießen: 275°C | | | | | | |

**Tabelle 4:**

| Erfindungsgemäße Beispiele: Flammschutz-Formmassen mit der Kombination von DEPAL mit Stickstoffsynergist und Metalloxid bzw. Hydroxid in glasfaserverstärktem PBT | | | | | | |
|---|---|---|---|---|---|---|
| Beispiel | DEPAL [%] | MPP [%] | Metalloxid | Klasse nach UL 94 (0,8 mm) | SV Zahl | Farbe* |
| B7 | 10 | 5 | 2% Zinkoxid | V-0 | 1213 | weiß |
| B8 | 10 | 5 | 5% Magnesiumhydroxid | V-0 | 1189 | weiß |
| B9 | 10 | 5 | 2% Magnesiumhydroxid | V-0 | 1197 | weiß |
| B10 | 10 | 5 | 2% Böhmit | V-0 | 1168 | weiß |
| B11 | 10 | 5 | 2% Dihydrotalcit | V-0 | 1234 | weiß |
| B12 | 10 | 5 | 2% Manganoxid | V-0 | 1145 | weiß |

| | | | | | | |
|---|---|---|---|---|---|---|
| ^{*)} von Prüfkörper, Massetemperatur beim Spritzgießen: 275°C | | | | | | |

## Patentansprüche

1. Flammschutzmittel-Stabilisator-Kombination für thermoplastische Polymere, enthaltend als Komponente A 25 bis 79,9 Gew.-% eines Phosphinsäuresalzes der Formel (I) und/oder eines Diphosphinsäuresalzes der Formel (II) und/oder deren Polymere, 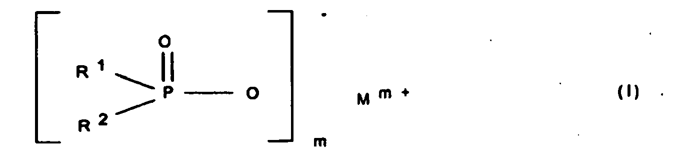 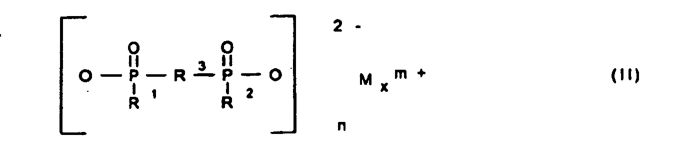 worin
R¹, R² gleich oder verschieden sind und C₁-C₆-Alkyl, linear oder verzweigt und/oder Aryl;
R³ C₁-C₁₀-Alkylen, linear oder verzweigt, C₆-C₁₀-Arylen, -Alkylarylen oder -Arylalkylen;
M Mg, Ca, Al, Sb, Sn, Ge, Ti, Zn, Fe, Zr, Ce, Bi, Sr, Mn, Li, Na, K und/oder eine protonierte Stickstoffbase;
m 1 bis 4;
n 1 bis 4;
x 1 bis 4
bedeuten,
als Komponente B 20 bis 50 Gew.-% Melaminpolyphosphat und
als Komponente C 0,1 bis 50 Gew.-% Magnesiumoxid, Zinkoxid, Manganoxid,
Zinnoxid, Dihydrotalcit, Hydrocalumit, Magnesiumhydroxid, Calciumhydroxid,
Zinkhydroxid, Zinnoxidhydrat, Manganhydroxid, Zinkborat, basisches Zink-Silikat,
Zinkstannat oder Mischungen dieser Stoffe, wobei die Summe der Komponenten immer 100 Gew.-% beträgt.

2. Flammschutzmittel-Stabilisator-Kombinatiön nach Anspruch 1, **dadurch gekennzeichnet, dass** R¹, R² gleich oder verschieden sind und C₁-C₆-Alkyl, linear oder verzweigt und/oder Phenyl bedeuten.

3. Flammschutzmittel-Stabilisator-Kombination nach Anspruch 1 oder 2, **dadurch gekennzeichnet, dass** R¹, R² gleich oder verschieden sind und Methyl, Ethyl, n-Propyl, iso-Propyl, n-Butyl, tert.-Butyl, n-Pentyl und/oder Phenyl bedeuten.

4. Flammschutzmittel-Stabilisator-Kombination nach einem oder mehreren der Ansprüche 1 bis 3, **dadurch gekennzeichnet, dass** R³ Methylen, Ethylen, n-Propylen, iso-Propylen, n-Butylen, tert.-Butylen, n-Pentylen, n-Octylen oder n-Dodecylen; Phenylen oder Naphthylen; Methyl-phenylen, Ethyl-phenylen, tert.-Butylphenylen, Methyl-naphthylen, Ethyl-naphthylen oder tert.-Butylnaphthylen; Phenyl-methylen, Phenyl-ethylen, Phenyl-propylen oder Phenyl-butylen bedeutet.

5. Flammschutzmittel-Stabilisator-Kombination nach einem oder mehreren der Ansprüche 1 bis 4, **dadurch gekennzeichnet, dass** M Calcium-, Aluminium- oder Zink-lonen bedeutet.

6. Flammschutzmittel-Stabilisator-Kombination nach einem oder mehreren der Ansprüche 1 bis 5, **dadurch gekennzeichnet, dass** 50 bis 78 Gew.-% der Komponente A, 20 bis 50 Gew.-% der Komponente B und 2 bis 20 Gew.-% der Komponente C enthalten sind.

7. Flammfest ausgerüstete Kunststoff-Formmasse, enthaltend eine Flammschutzmittel-Stabilisator-Kombination gemäß einem oder mehreren der Ansprüche 1 bis 6.

8. Flammfest ausgerüstete Kunststoff-Formmasse gemäß Anspruch 7, **dadurch gekennzeichnet, dass** es sich bei dem Kunststoff um thermoplastischen Polymere der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI) Kunststoffe handelt.

9. Flammfest ausgerüstete Kunststoff-Formmasse gemäß Anspruch 7 oder 8, **dadurch gekennzeichnet, dass** es sich bei dem Kunststoff um Polyamide, Polyester und PPE/HIPS-Blends handelt.

10. Flammfest ausgerüstete Kunststoff-Formmasse gemäß einem oder mehreren der Ansprüche 7 bis 9, **dadurch gekennzeichnet, dass** sie die Flammschutzmittel-Stabilisator-Kombination in einer Menge von 2 bis 50 Gew.-%, bezogen auf die Kunststoff-Formmasse, enthält.

11. Flammfest ausgerüstete Kunststoff-Formmasse gemäß einem oder mehreren der Ansprüche 7 bis 10, **dadurch gekennzeichnet, dass** sie die Flammschutzmittel-Stabilisator-Kombination in einer Menge von 10 bis 30 Gew.-%, bezogen auf die Kunststoff-Formmasse, enthält.

12. Polymer-Formkörper, -Filme, -Fäden und -Fasern enthaltend eine Flammschutzmittel-Stabilisator-Kombination gemäß einem oder mehreren der Ansprüche 1 bis 6.

13. Polymer-Formkörper, -Filme, -Fäden und -Fasern nach Anspruch 12, **dadurch gekennzeichnet, dass** es sich bei dem Polymeren um Polystyrol-HI (High-Impact). Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol), Polyamid, Polyester und/oder ABS handelt.

14. Polymer-Formkörper, -Filme, -Fäden und -Fasern nach Anspruch 12 oder 13, **dadurch gekennzeichnet, dass** sie die Flammschutzmittel-Stabilisator-Kombination in einer Menge von 2 bis 50 Gew.-%, bezogen auf den Polymergehalt, enthalten.

15. Polymer-Formkörper, -Filme, -Fäden und -Fasern nach einem oder mehreren der Ansprüche 12 bis 14, **dadurch gekennzeichnet, dass** sie die Flammschutzmittel-Stabilisator-Kombination in einer Menge von 10 bis 30 Gew.-%, bezogen auf den Polymergehalt, enthalten.

## Claims

1. A flame retardant-stabilizer combination for thermoplastic polymers, comprising, as component A, from 25 to 79.9% by weight of a phosphinic acid salt of the formula (I) and/or of a diphosphinic acid salt of the formula (II) and/or polymers thereof 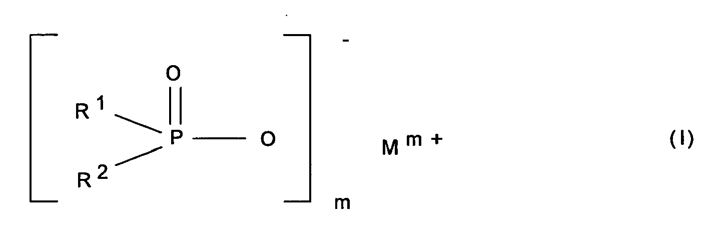 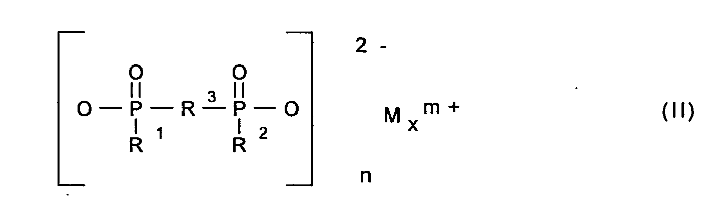 where
R¹, R² are the same or different and are each C₁-C₆-alkyl, linear or branched, and/or aryl;
R³ is C₁-C₁₀-alkylene, linear or branched, C₆-C₁₀-arylene, -alkylarylene or -arylalkylene;
M is Mg, Ca, Al, Sb, Sn, Ge, Ti, Zn, Fe, Zr, Ce, Bi, Sr, Mn, Li, Na, K and/or a protonated nitrogen base;
m is from 1 to 4;
n is from 1 to 4;
x is from 1 to 4,
as component B, from 20 to 50% by weight of melamine polyphosphate and,
as component C, from 0.1 to 50% by weight of magnesium oxide, zinc oxide,
manganese oxide, tin oxide, dihydrotalcite, hydrocalumite, magnesium hydroxide,
calcium hydroxide, zinc hydroxide, tin oxide hydrate, manganese hydroxide, zinc borate, basic zinc silicate, zinc stannate or mixtures of these substances, the sum of the components always being 100% by weight.

2. A flame retardant-stabilizer combination as claimed in claim 1, wherein R¹, R² are the same or different and are each C₁-C₆-alkyl, linear or branched, and/or phenyl.

3. A flame retardant-stabilizer combination as claimed in claim 1 or 2, wherein R¹, R² are the same or different and are each methyl, ethyl, n-propyl, isopropyl, n-butyl, tert-butyl, n-pentyl and/or phenyl.

4. A flame retardant-stabilizer combination as claimed in one or more of claims 1 to 3, wherein R³ is methylene, ethylene, n-propylene, isopropylene, n-butylene, tert-butylene, n-pentylene, n-octylene or n-dodecylene; phenylene or naphthylene; methylphenylene, ethylphenylene, tert-butylphenylene, methylnaphthylene, ethylnaphthylene or tert-butylnaphthylene; phenylmethylene, phenylethylene, phenylpropylene or phenylbutylene.

5. A flame retardant-stabilizer combination as claimed in one or more of claims 1 to 4, wherein M is a calcium, aluminum or zinc ion.

6. A flame retardant-stabilizer combination as claimed in one or more of claims 1 to 5, wherein from 50 to 78% by weight of component A, from 20 to 50% by weight of component B and from 2 to 20% by weight of component C are present.

7. A flame-retardant plastics molding composition, comprising a flame retardant-stabilizer combination as claimed in one or more of claims 1 to 6.

8. A flame-retardant plastics molding composition as claimed in claim 7, wherein the plastics used are thermoplastic polymers of the type high-impact polystyrene, polyphenylene ether, polyamides, polyesters, polycarbonates and blends or polymer blends of the type ABS (acrylonitrile-butadiene-styrene) or PC/ABS (polycarbonate/acrylonitrile-butadiene-styrene) or PPE/HIPS (polyphenylene ether/HI polystyrene) plastics.

9. A flame-retardant plastics molding composition as claimed in claim 7 or 8, wherein the plastics are polyamides, polyesters and PPE/HIPS blends.

10. A flame-retardant plastics molding composition as claimed in one or more of claims 7 to 9, which comprises the flame retardant-stabilizer combination in an amount of from 2 to 50% % by weight, based on the plastics molding composition.

11. A flame-retardant plastics molding composition as claimed in one or more of claims 7 to 10, which comprises the flame retardant-stabilizer combination in an amount of from 10 to 30% by weight, based on the plastics molding composition.

12. A polymer shaped body, film, thread or fiber comprising a flame retardant-stabilizer combination as claimed in one or more of claims 1 to 6.

13. A polymer shaped body, film, thread or fiber as claimed in claim 12, wherein the polymers are high-impact polystyrene, polyphenylene ethers, polyamides, polyesters, polycarbonates and blends or polymer blends of the type ABS (acrylonitrile-butadiene-styrene) or PC/ABS (polycarbonate/acrylonitrile-butadiene-styrene), polyamide, polyester and/or ABS.

14. A polymer shaped body, film, thread or fiber as claimed in claim 12 or 13, which comprises the flame retardant-stabilizer combination in an amount of from 2 to 50% by weight, based on the polymer content.

15. A polymer shaped body, film, thread or fiber as claimed in one or more of claims 12 to 14, which comprises the flame retardant-stabilizer combination in an amount of from 10 to 30% by weight, based on the polymer content.

## Revendications

1. Association d'agent ignifuge et de stabilisant pour polymères thermoplastiques, qui contient en tant que composant A 25 à 79,9 % en poids d'un sel d'acide phosphinique de formule (I) et/ou d'un sel d'acide diphosphinique de formule (II) et/ou de leurs polymères, 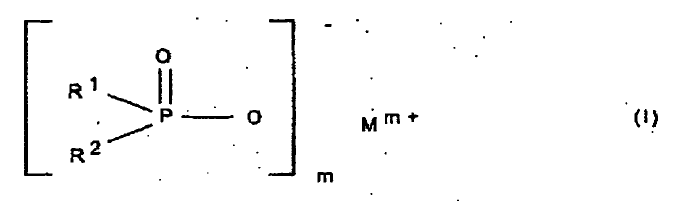 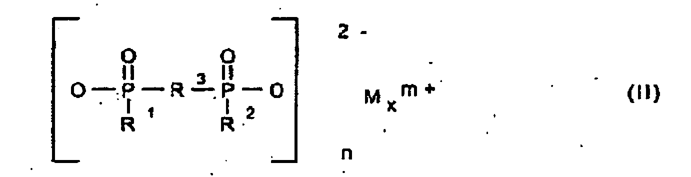 formules dans lesquelles
R¹, R² sont identiques ou différents et représentent un groupe alkyle en C₁-C₆ linéaire ou ramifié et/ou un groupe aryle ;
R³ représente un groupe alkylène en C₁-C₁₀ linéaire ou ramifié, un groupe arylène, alkylarylène ou arylalkylène en C₆-C₁₀ ;
M représente Mg, Ca, Al, Sb, Sn, Ge, Ti, Zn, Fe, Zr, Ce, Bi, Sr, Mn, Li, Na, K et/ou une base azotée protonée ;
m représente 1 à 4 ;
n représente 1 à 4 ;
x représente 1 à 4,
en tant que composant B 20 à 50 % en poids de polyphosphate de mélamine et
en tant que composant C 0,1 à 50 % en poids d'oxyde de magnésium, oxyde de zinc, oxyde de manganèse, oxyde d'étain, dihydrotalcite, hydrocalumite, hydroxyde de magnésium, hydroxyde de calcium, hydroxyde de zinc,
oxyde d'étain hydraté, hydroxyde de manganèse, borate de zinc, silicate de zinc basique, stannate de zinc ou de mélanges de ces substances, la somme des composants étant toujours égale à 100 % en poids.

2. Association d'agent ignifuge et de stabilisant selon la revendication 1, **caractérisée en ce que** R¹, R sont identiques ou différents et représentent un groupe alkyle en C₁-C₆ linéaire ou ramifié et/ou un groupe phényle.

3. Association d'agent ignifuge et de stabilisant selon la revendication 1 ou 2, **caractérisée en ce que** R¹, R² sont identiques ou différents et représentent un groupe méthyle, éthyle, n-propyle, isopropyle, n-butyle, tert-butyle, n-pentyle et/ou phényle.

4. Association d'agent ignifuge et de stabilisant selon une ou plusieurs des revendications 1 à 3, **caractérisée en ce que** R³ représente un groupe méthylène, éthylène, n-propylène, isopropylène, n-butylène, tert-butylène, n-pentylène, n-octylène ou n-dodécylène ; phénylène ou naphtylène ; méthylphénylène, éthyl-phénylène, tert-butylphénylène, méthyl-naphtylène, éthyl-naphtylène ou tert-butylnaphtylène ; phényl-méthylène, phényl-éthylène, phényl-propylène ou phényl-butylène.

5. Association d'agent ignifuge et de stabilisant selon une ou plusieurs des revendications 1 à 4, **caractérisée en ce que** M représente des ions calcium, aluminium ou zinc.

6. Association d'agent ignifuge et de stabilisant selon une ou plusieurs des revendications 1 à 5, **caractérisée en ce que** sont contenus 50 à 78 % en poids du composant A, 20 à 50 % en poids du composant B et 2 à 20 % en poids du composant C.

7. Matière à mouler en matière plastique munie d'un traitement ignifuge, contenant une association d'agent ignifuge et de stabilisant selon une ou plusieurs des revendications 1 à 6.

8. Matière à mouler en matière plastique munie d'un traitement ignifuge selon la revendication 7, **caractérisée en ce que** la matière plastique consiste en des polymères thermoplastiques du type polystyrène-HI (High-Impact), des polyphénylène-éthers, polyamides, polyesters, polycarbonates et des alliages ou alliages de polymères du type ABS (acrylonitrile-butadiène-styrène) ou PC/ABS (polycarbonate/acrylonitrile-butadiène-styrène) ou des matières plastiques PPE/HIPS (polyphénylène-éther/polystyrène-HI).

9. Matière à mouler en matière plastique munie d'un traitement ignifuge selon la revendication 7 ou 8, **caractérisée en ce que** la matière plastique consiste en polyamides, polyesters et alliages PPE/HIPS.

10. Matière à mouler en matière plastique munie d'un traitement ignifuge selon une ou plusieurs des revendications 7 à 9, **caractérisée en ce qu'**elle contient l'association d'agent ignifuge et de stabilisant en une quantité de 2 à 50 % % en poids, par rapport à la matière à mouler en matière plastique.

11. Matière à mouler en matière plastique munie d'un traitement ignifuge selon une ou plusieurs des revendications 7 à 10, **caractérisée en ce qu'**elle contient l'association d'agent ignifuge et de stabilisant en une quantité de 10 à 30 % en poids, par rapport à la matière à mouler en matière plastique.

12. Corps moulés, films, fils et fibres polymères contenant une association d'agent ignifuge et de stabilisant selon une ou plusieurs des revendications 1 à 6.

13. Corps moulés, films, fils et fibres polymères selon la revendication 12, **caractérisés en ce que** le polymère consiste en polystyrène-HI (High-Impact), polyphénylène-éther, polyamides, polyesters, polycarbonates et alliages ou alliages de polymères du type ABS (acrylonitrile-butadiène-styrène) ou PC/ABS (polycarbonate/ acrylonitrile-butadiène-styrène), polyamide, polyester et/ou ABS.

14. Corps moulés, films, fils et fibres polymères selon la revendication 12 ou 13, **caractérisés en ce qu'**ils contiennent l'association d'agent ignifuge et de stabilisant en une quantité de 2 à 50 % en poids, par rapport à la teneur en polymère.

15. Corps moulés, films, fils et fibres polymères selon une ou plusieurs des revendications 12 à 14, **caractérisés en ce qu'**ils contiennent l'association d'agent ignifuge et de stabilisant en une quantité de 10 à 30 % en poids, par rapport à la teneur en polymère.
